(19) Europäisches Patentamt

European Patent Office

Office européen des brevets

(11) **EP 1 227 142 A2**

(12) **EUROPEAN PATENT APPLICATION**

(43) Date of publication:
**31.07.2002 Bulletin 2002/31**

(51) Int Cl.⁷: **C10J 3/18**, C10J 3/20

(21) Application number: **02250603.4**

(22) Date of filing: **29.01.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **29.01.2001 JP 2001059208**<br><br>(71) Applicant: **Hatanaka, Takefumi**<br>**Tokyo 193-0836 (JP)** | (72) Inventor: **Hatanaka, Takefumi**<br>**Tokyo 193-0836 (JP)**<br><br>(74) Representative:<br>**Lyndon-Stanford, Edward Willoughby Brooke**<br>**MARKS & CLERK,**<br>**57/60 Lincoln's Inn Fields**<br>**London WC2A 3LS (GB)** |

(54) **Method and system for producing hydrogen from solid carbon materials and water**

(57)    A method and system for producing hydrogen from solid carbon materials and feed water are disclosed as including an arc plasma reactor (APR) which has arc discharge electrodes and a large number of minute arc passages (35) formed in the solid carbon materials filled in the plasma reactor. Feed water is converted into steam in the plasma reactor and the steam is fed through the minute arc passages in which steam reacts with the solid carbon materials in the presence of arc plasmas to produce hydrogen rich gas.

FIG. 2

## Description

### BACKGROUND OF THE INVENTION

#### 1. Field of the Invention

This invention relates to methods and systems for producing hydrogen and, more particularly, to a method and system for producing hydrogen rich gas to be used as chemical raw material and fuel for various applications.

#### 2. Description of the Related Art

Extensive research and development works have been undertaken to produce hydrogen from water or natural gas which is subjected to steam reforming.

U.S. Patent No. 5,030,661 discloses a steam reforming method for converting natural gas into hydrogen. In this prior art method, the use of natural gas as starting material remarkably increases the production cost of hydrogen. Further, due to the steam reforming process, there is a need for a largely sized furnace that consumes a large amount of energy consumption. Accordingly, the hydrogen production plant is largely sized, with a resultant complicated steps in operation of the production plant and in a remarkable increase in operation costs. Also, the furnace tends to expel a large amount of $CO_2$ which becomes a major cause of global warming.

U.S. Patent No. 5,159,900 discloses a hydrogen production system using a underwater arc discharge method between opposing carbon electrodes. In this system, an arc discharge area is limited in an extremely small area between sharp edges of the opposing electrodes, with only extremely small amount of steam reacting with carbon to produce hydrogen rich gas at an extremely low production yield.

U.S. Patent No. 5,513,600 discloses an electrolyte reactor which includes a plurality of opposing electrodes for producing hydrogen and oxygen. In this structure, a large mount of hydrogen bubbles and oxygen bubbles are stick to the surfaces of the electrodes, with a resultant degraded contact efficiency of water with respect to the electrode surfaces to cause a degraded operating efficiency of the electrolyte reactor.

U.S. Patent No. 5,690,902 discloses a hydrogen generating apparatus which employs iron powders filled in a tube. In this apparatus, although high temperature water is brought into contact with the surfaces of the iron powders to cause oxidation of the metal surfaces for thereby producing hydrogen, the iron surfaces are formed with iron hydroxides during reaction of water with iron powders, resulting in a degraded reacting efficiency.

Thus, the prior art hydrogen production processes and systems are extremely low in efficiency and it was extremely difficult to produce hydrogen on an on-site and on-demand basis at a remarkably low cost.

### SUMMARY OF THE INVENTION

It is therefore an object of the present invention to provide a method and system for producing hydrogen at the highest efficiency from low cost solid carbon material and water on a mass production basis at a remarkably low cost.

According to one aspect of the present invention, there is provided a method of producing hydrogen from solid carbon materials and feed water, comprising the steps of: preparing an arc plasma reactor having a plasma reactor chamber and arc electrodes located in the reactor chamber; supplying the solid carbon materials into the reactor chamber to form a large number of minute arc passages in the solid carbon materials; supplying electric power to the arc electrodes to produce arc discharge plasmas in the minute arc passages, respectively; and passing steam through the minute arc passages to cause the steam to react with the solid carbon materials under the presence of the arc discharge plasmas to produce hydrogen rich gas.

According to another aspect of the present invention, there is provided a hydrogen production system comprising: an arc plasma reactor having a solid carbon supply port, a feed water supply port, an insulating casing formed with a synthesis gas outlet, an arc plasma chamber formed in the insulating casing, alternating current arc electrodes located in one end of the arc plasma chamber, a neutral electrode located in the other end of the arc plasma chamber, and a plurality of minute arc passages formed in solid carbon materials filled in the arc plasma chamber; a feed water supply pump for supplying feed water into the arc plasma chamber via the feed water supply port to cause the feed water to be converted into steam; and an alternating current power supply for supplying alternating current electric power to the arc electrodes to cause arc discharge plasmas to be generated in the minute arc passages, respectively, such that the water is exposed to the arc discharge plasmas to form the steam which reacts with the solid carbon materials during passing through the minute arc passages to produce hydrogen rich gas.

### BRIEF DESCRIPTION OF THE DRAWINGS

The invention, together with objects and advantages thereof, may best be understood by reference to the following description of the presently preferred embodiments together with the accompanying drawings, in which:

FIG. 1 is a schematic view of a hydrogen production system to carry out a method of the present invention; and
FIG. 2 is an enlarged cross sectional view of an arc plasma reactor shown in FIG. 1.

DETAILED DESCRIPTION OF THE

PREFERRED EMBODIMENTS

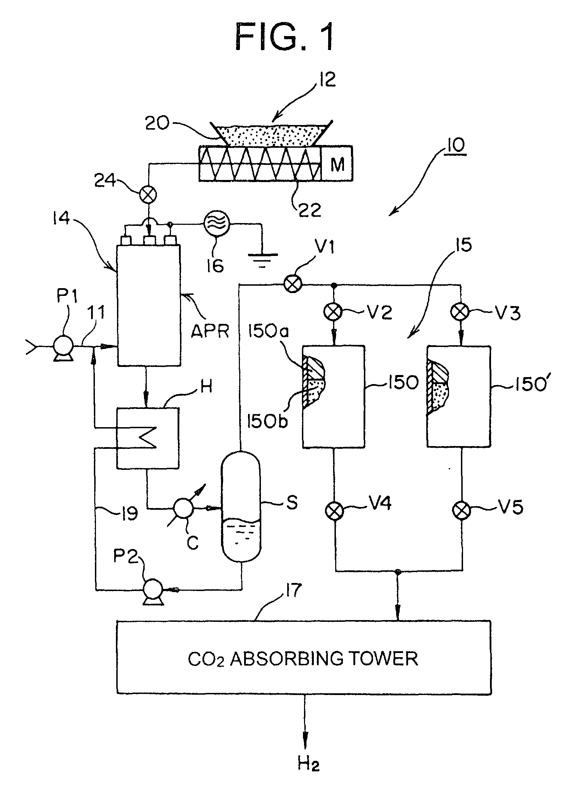

Referring to the drawings, FIG. 1 shows a hydrogen production system 10 of a preferred embodiment according to the present invention to carry out a method of the present invention.

In FIG. 1, the hydrogen production system 10 is comprised of a solid carbon feed unit 12 which supplies solid carbon materials such as granular, particle, powder shaped or ball shaped graphite materials, activated carbon materials or char coals, a water feed pump P1 for supplying feed water, an arc plasma reactor APR for converting the solid carbon particles in the presence of steam into hydrogen rich gas, a heat exchanger H located at a down stream side of the arc plasma reactor APR for cooling the hydrogen rich gas while preheating recycle water, a cooling unit C connected to the heat exchanger H for further cooling the hydrogen rich gas, a liquid/gas separator S for separating the hydrogen rich gas and condensed water, a recycle line 19, a circulation pump P2, shut-ff valves V1 to V5, and first and second reactors 15 and 17 for removing impurities such as CO and $CO_2$ contained in the hydrogen rich gas. The liquid/gas separator S serves to separate condensed water from the hydrogen rich gas to compel the condensed water to be recycled though the recycle line 19 and the circulation pump P2 to the arc plasma reactor APR as recycle water.

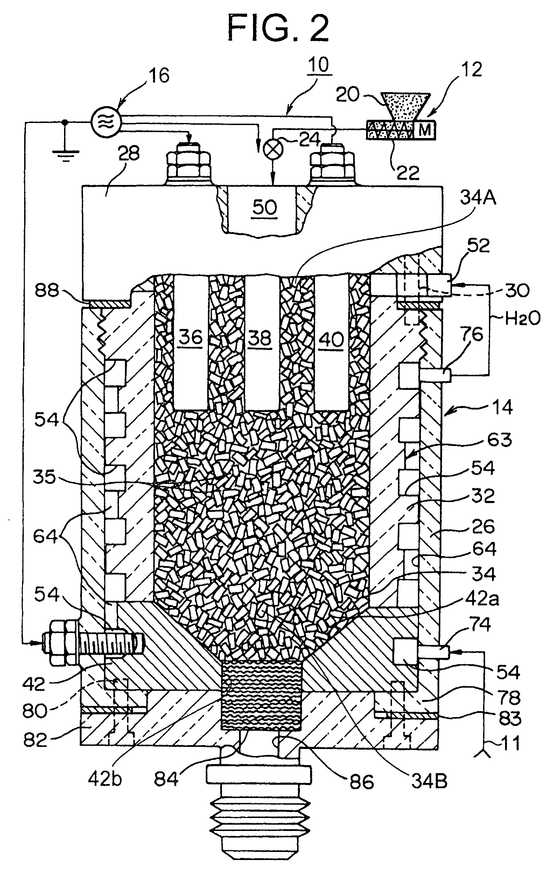

FIG. 2 shows a detailed structure of the arc plasma reactor APR shown in FIG. 1. In FIG. 2, the arc plasma reactor APR includes an arc reactor unit 14 connected to the solid carbon feed unit 12, and the arc power supply 16. The solid carbon feed unit 12 is comprised of a hopper 20 which stores solid carbon particles, a screw feeder 22 and a rotary valve 24 to continuously supply the solid carbon materials at a predetermined feed rate. The thermal reactor unit 14 includes a cylindrical outer insulating casing 26 made of heat resistant ceramic, and an inner insulating casing 32 having a cylindrical plasma reaction chamber 34. An insulating electrode holder 28 is coupled to an upper end of the inner insulating casing 32 by means of fixture bolts 30. The plasma reaction chamber 34 has an upstream side formed with a steam generating zone 34A and a downstream side formed with a hydrogen rich gas generating zone 34B. In a practical case, the hydrogen rich gas generating zone 34B occupies a major part of the plasma reaction chamber 34. When the solid carbon particles are supplied into the plasma reaction chamber 34, a large number of minute arc passages 35 are formed in the form of gaps between the solid carbon materials through which large number of arc plasmas are created due to sparks in a uniform manner in the presence of steam which serves as plasma gas. When this occurs, feed water is exposed to a high temperature at the steam generating zone 34A and converted into a stream of steam. The stream of steam flows through the large number of minute arc passages 35 toward the downstream side. During such flow of stream of steam, the steam reacts with the solid carbon materials under the presence of arc plasma to form the hydrogen rich gas containing hydrogen, carbon monoxide and carbon dioxide according to the formulae:

$$C + H_2O \rightarrow CO + H_2 \qquad (1)$$

$$CO + H_2O \rightarrow CO_2 + H_2 \qquad (2)$$

The rate of hydrogen content in the hydrogen rich gas variably depends on the operating temperature in the reaction chamber 34. That is, as the reaction temperature of the reaction chamber 34 increases, the hydrogen content in the hydrogen rich gas increases.

The insulating electrode holder 28 supports rod-like multiple arc electrodes 36, 38, 40. An annular disc shaped neutral electrode 42 is located at a lower portion of the insulating casing 32. The neutral electrode 42 has a conical surface 42a and a central opening 42b. The neutral electrode 42 is placed and supported by an electrode holder 78 formed at a bottom of the insulating casing 26 and fixed in place with fixture bolts 80. On the other hand, the electrode holder 28 has a carbon supply port 50 connected to the solid carbon feed unit 12. An upper portion of the outer insulating casing 26 has a feed water supply port 52 formed in the vicinity of upper areas of the arc electrodes 36, 38, 40 for introducing feed water into the steam generating zone 34A. This is advantageous in that feed water serves as coolant for preventing the electrodes 36, 38, 40 from being overheated and that feed water is effectively converted into steam which serves as plasma gas for promoting generation of arc plasmas in the synthesis gas generating section 35. Outer peripheries of the inner casing 32 and the neutral electrode 42 are formed with cooling and heat recapturing section 63 composed of annular coolant passages 54, with the adjacent coolant passages being connected to one another through intermediate passages 54. The outer insulating 26 has an inlet 74 and an outlet 76 which communicates to one another via the coolant passages 54. Connected to the electrode holder 78 via a sealing plate 83 by means of bolts 80 is an insulating end plate 82. The neutral electrode 42 and the end plate 82 have concentric bores 42b and 82a, respectively, in which a filter 84 is received to pass synthesis gas therethrough. The end plate 82 has a synthesis gas outlet 86.

The inlet 74 is connected to the feed water line 11 and the outlet 76 is connected to the feed water supply port 52. Feed water is preheated in the cooling section 63 and is discharged from the outlet 76 into the feed water supply port 52. Feed water is then introduced into the steam generating section 34A to form plasma gas composed of steam. A portion of the hydrogen rich gas emitting from the outlet 86 may be recycled through a recirculation line (not shown) into the plasma reaction chamber 34 in which the water shift reaction takes place in the manner expressed by the reaction formula (2) described above. Designated at 88 is a seal member.

In FIG. 2, the electrode holder 28 fixedly supports alternating current three phase electrodes 36, 38, 40 which are supplied with alternating three phase electric power from the arc power supply 16. The neutral electrode 42 is connected to a neutral point of the three phase arc power supply 16, which provides electric power output of output voltage in a value ranging from 30 to 240 Volts at an output frequency of 10 to 60 Hz.

Turning now back to Fig. 1, the first reactor 15 is comprised of a pair of reactors 150, 150' which are alternatively operated by means of the shut-off valves V2 to V5. Each of the reactors 150, 150' contains active carbon particles 150a and a CO conversion catalyst 150b composed of cobalt/molybdenum catalyst which is sold by Nikki Chemical Co. Ltd. under the name "N938" which converts CO to $CO_2$. The second reactor is composed of a $CO_2$ absorption tower which includes a high pressure absorption reactor and a lower absorption reactor, such as a known PSA (Pressure Swing Absorption), both of which are filled with active carbon particles to absorb remaining CO and $CO_2$ to produce highly purified hydrogen gas $H_2$. The $CO_2$ absorption tower 17 may be filled with the carbon dioxide absorbent disclosed in Japanese Patent Provisional Publication No. 11-244652.

In operation, the three-phase arc discharge electric power is supplied to the three-phase arc electrodes 36, 38, 40 of the arc plasma reactor APR while the screw feeder 22 and the rotary valve 24 are driven to feed the solid carbon material to the arc plasma reactor APR. Next, the feed water supply pump P1 is driven to supply feed water to the steam generating zone 34A of the plasma reaction chamber 34 from the feed water supply port 52, with feed water being exposed to the high temperature to generate steam as plasma gas. Steam flows through the large number of minute plasma passages 35, with steam reacting with the solid carbon materials at the temperature of more than 1000°C to be converted into hydrogen rich gas. The hydrogen rich gas is then cooled in the heat exchanger H and is further cooled in the cooler C to the temperature in the range between 60 to 90 °C. The hydrogen rich gas thus cooled is supplied to the liquid/gas separator S where moisture component is separated from the hydrogen rich gas to produce condensed water. When condensed water reaches a given level, the pump P2 is driven to supply condensed water to the feed water supply line 11 to be admixed with fresh feed water. Mixed water is preheated at the cooling section 63 of the arc plasma reactor APR and is then supplied to the feed water supply port 52. Dried hydrogen rich gas is then delivered to the first and second reactors 15 and 17 to remove the impurities such as CO and $CO_2$ in the manner as previously discussed to produce a purified hydrogen gas $H_2$.

The system and method of the present invention provides numerous advantages over the prior art practices and which includes:

(1) Feed water and solid carbon materials, which are extremely low in cost, can be utilized as the raw materials, resulting in a remarkable reduction in production cost of hydrogen.

(2) The utilization of the arc plasma reactor which is small in structure but has a high operating performance enables efficient production of hydrogen rich gas from low cost solid carbon material and feed water.

(3) Since whole of the solid carbon materials are consumed only for producing hydrogen rich gas and no carbon material is used as fuel for the reformer as would required in the prior art practice, the utilization rate of the carbon materials is extremely high that leads to a remarkable reduction in production cost of the hydrogen rich gas.

(4) In the prior art practice, condensed water obtained during production of the hydrogen rich gas through the use of steam reforming method is expelled outside, causing environmental contaminants. On the contrary, the method and system of the present invention enables condensed water to be recycled as recycle water which is delivered to the arc plasma reactor APR, with a resultant remarkable decrease in the amount of feed water while eliminating environmental pollution.

While a specific embodiment of the invention has been described in detail, it will be appreciated by those skilled in the art that various modifications and alternatives to those details could be developed in light of the overall teachings of the disclosure. Accordingly, the particular embodiment disclosed is meant to be illustrative only and not limiting to the scope of invention which is defined in appended claims.

**Claims**

1. A method of producing hydrogen from solid carbon materials and feed water, comprising the steps of:

preparing an arc plasma reactor having a plasma reactor chamber and arc discharge electrodes located in the reactor chamber;
supplying solid carbon materials into the reactor chamber to form a large number of minute arc passages in the solid carbon materials;
supplying electric power to the arc discharge electrodes to produce arc discharge plasmas in the minute arc passages, respectively; and
passing steam through the minute arc passages to cause the steam to react with the solid carbon materials under the presence of the arc discharge plasmas to produce hydrogen rich gas.

2. The method of claim 1, wherein the thermal plasma reactor has an upstream side formed with a steam generating zone and a downstream side formed with a hydrogen rich gas generating zone, and further comprising the steps of:

supplying feed water into the steam generating zone of the arc plasma reactor to form the steam at the upstream side thereof;

reacting the steam with the solid carbon materials in the hydrogen generating zone in the presence of the arc discharge plasmas to generate the hydrogen rich gas;

cooling the hydrogen rich gas to separate condensed water; and

recycling the condensed water into the steam generating zone to be converted into the steam.

3. The method of claims 1 or 2, further comprising the steps of:

separating impurities containing CO and $CO_2$ from the hydrogen rich gas.

4. A hydrogen production system comprising:

an arc plasma reactor having a solid carbon supply port, a feed water supply port, an insulating casing formed with a synthesis gas outlet, an arc plasma chamber formed in the insulating casing, alternating current arc discharge electrodes located in one end of the arc plasma chamber, a neutral electrode located in the other end of the arc plasma chamber, and a plurality of minute arc passages formed in solid carbon materials filled in the arc plasma chamber;

a feed water supply pump for supplying feed water into the arc plasma chamber via the feed water supply port to cause the feed water to be converted into steam; and

an alternating current power supply for supplying alternating current electric power to the arc discharge electrodes to cause arc discharge plasmas to be generated in the minute arc passages, respectively, such that the water is exposed to the arc discharge plasmas to form the steam which reacts with the solid carbon materials in the presence of the arc discharge plasmas during passing through the minute arc passages to produce hydrogen rich gas.

5. The hydrogen production system of claim 4, further comprising:

a liquid/gas separator unit coupled to the arc plasma reactor for separating the hydrogen rich gas and condensed water from one another; and

a recycle line for recycling the condensed water to the arc plasma reactor to form the hydrogen rich gas therein.

# FIG. 1

# FIG. 2